(19) **Europäisches Patentamt / European Patent Office / Office européen des brevets**

(11) **EP 3 529 568 B1**

(12) # EUROPÄISCHE PATENTSCHRIFT

(45) Veröffentlichungstag und Bekanntmachung des Hinweises auf die Patenterteilung:
**19.08.2020 Patentblatt 2020/34**

(21) Anmeldenummer: **17811849.3**

(22) Anmeldetag: **10.11.2017**

(51) Int Cl.:
**G01F 1/708** *(2006.01)*    **G01F 25/00** *(2006.01)*

(86) Internationale Anmeldenummer:
**PCT/EP2017/001307**

(87) Internationale Veröffentlichungsnummer:
**WO 2018/086742 (17.05.2018 Gazette 2018/20)**

(54) **VERFAHREN ZUR VERBESSERUNG DER MESSGENAUIGKEIT EINER DURCHFLUSS-MESSANORDNUNG**

METHOD FOR IMPROVING THE MEASURING PRECISION OF A FLOW MEASURING ASSEMBLY

PROCÉDÉ PERMETTANT D'AMÉLIORER LA PRÉCISION DE MESURE D'UN SYSTÈME DE MESURE DE DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2016 DE 102016013328**

(43) Veröffentlichungstag der Anmeldung:
**28.08.2019 Patentblatt 2019/35**

(73) Patentinhaber: **Nivus GmbH**
**75031 Eppingen (DE)**

(72) Erfinder: **SOLLIEC, Laurent**
**76131 Karlsruhe (DE)**

(74) Vertreter: **Mehl-Mikus, Claudia**
**mepat Patentanwälte**
**Dr. Mehl-Mikus, Goy, Dr. Drobnik PartG mbB**
**Eisenlohrstraße 31**
**76135 Karlsruhe (DE)**

(56) Entgegenhaltungen:
**WO-A1-2013/164805    CN-A- 102 087 130**
**CN-A- 102 538 912    US-A1- 2011 162 462**
**US-A1- 2016 131 516**

- YEH T T ET AL: "An intelligent ultrasonic flow meter for improved flow measurement and flow calibration facility", IMTC 2001. PROCEEDINGS OF THE 18TH. IEEE INSTRUMENTATION AND MEASUREMENT TECHNOLOGY CONFERENCE. BUDAPEST, HUNGARY, MAY 21 - 23, 2001; [IEEE INSTRUMENTATION AND MEASUREMENT TECHNOLOGY CONFERENCE. (IMTC):], NEW YORK, NY : IEEE, US, Bd. 3, 21. Mai 2001 (2001-05-21), Seiten 1741-1746, XP010547252, DOI: 10.1109/IMTC.2001.929499 ISBN: 978-0-7803-6646-6

**Beschreibung**

Die Erfindung betrifft ein Verfahren zur Verbesserung der Messgenauigkeit einer Durchfluss-Messanordnung und ein Softwareprogrammprodukt.

Rohrleitungen, die von Wasser oder Abwässern (als Beispiele für Liquide) durchflossen werden, werden mittels dafür vorgesehenen Durchfluss-Messanordnungen überwacht, wobei die Fließgeschwindigkeit, der Durchfluss (absolut) bzw. dessen Rate als Volumenstrom durch die jeweilige Rohrleitung gemessen werden. Die Messtechnik basiert auf der Verwendung von speziellen Durchfluss-Messsensoren, wie bspw. Ultraschallsensoren. Diese werden in unterschiedlichen Anordnungen an der zu vermessenden Rohrleitung verwendet, so z. B. in einer Laufzeit-, Doppler- oder Kreuzkorrelationsanordnung. Pro Messanordnung sind ein bis vier Ultraschallsensoren vorgesehen, die oft in der Nähe von Störungsstellen wie bspw. Biegungen oder auch Verjüngungen der Rohrleitung angeordnet sind. Diese Störungsstellen beeinflussen den Durchfluss des Liquids durch die Rohrleitungen und können Messergebnisse der Durchflussmessung verfälschen. Somit ist aufgrund der nicht idealen Installationsbedingungen sowie der geringen Anzahl an Sensoreinheiten die Messgenauigkeit der Durchfluss-Messgeräte oft fehlerbehaftet.

Aus der WO 2013/164805 A1 ist ein Verfahren zur Durchflussmessung bekannt, wobei aus gemessenen Durchflussmessdaten mittels vorbestimmter Datensätze ein korrigierter Durchflussmesswert bestimmt wird. Dabei müssen im Vorfeld verschiedene Messungen durchgeführt und ausgewertet werden, um eine mögliche Korrektur der aktuellen Durchflussmessdaten zu bestimmen. Die Genauigkeit der Korrektur ist dabei abhängig von dem Fehler der vorangegangen Messungen, der sich in darauffolgenden Messungen fortpflanzt.

Ein Verfahren zur Durchflussmessung ist im Dokument Yeh T. T. et al: "An intelligent ultrasonic flow meter for improved flow measurement and flow calibration facility", IMTC 2001 Proceedings of the 18th IEEE Instrumentation and Measurement Technology Conference, Budapest, May 21-23, 2001, offenbart, wobei ein korrigierter Durchflussmesswert anhand einer Kombination von einer numerischen Simulation und einem neuronalen Netz bestimmt ist.

Ausgehend von diesem Stand der Technik ist es Aufgabe der vorliegenden Erfindung, ein Verfahren bereitzustellen, das den Einfluss von Störungsstellen bei Durchflussmessungen in liquiddurchflossenen Rohrleitungen minimiert und damit die Messgenauigkeit einer Durchfluss-Messung verbessert.

Diese Aufgabe wird durch ein Verfahren zur Verbesserung der Messgenauigkeit einer Durchfluss-Messanordnung bei Durchflussmessungen mit den Merkmalen des Anspruchs 1 gelöst.

Ferner wird die Aufgabe, eine exakte und schnelle Möglichkeit zum Verbessern der Messgenauigkeit einer Durchflussmessung bereitzustellen, mit einem Softwareprogramm oder Softwareprogrammprodukt mit den Merkmalen des unabhängigen Anspruchs 8 gelöst.

Weiterbildungen und bevorzugte Ausführungsformen werden durch die Unteransprüche beschrieben.

Das erfindungsgemäße Verfahren zur Verbesserung der Messgenauigkeit einer Durchfluss-Messanordnung in liquiddurchflossenen Rohrleitungen mit einer oder mehreren Störungsstelle(n), die einen Durchfluss eines Liquids durch die Rohrleitungen derart beeinflusst, dass eine Durchflussmessung der Messanordnung beeinträchtigt wird, wird mit einer Durchfluss-Messanordnung durchgeführt, die mit einer Datenverarbeitungseinheit und einer Speichereinheit operativ gekoppelt ist.

Das Verfahren umfasst die folgenden Schritte:

- Auswählen einer Störungsstelle in der Rohrleitung und Anordnen der Durchfluss-Messanordnung in einem vorbestimmten Abstand benachbart zu der Störungsstelle an der liquiddurchflossenen Rohrleitung;
- mit der Durchfluss-Messanordnung Messen zum Zeitpunkt t eines von der Störungsstelle abhängigen Durchfluss-Wertes $Q_1$ des Liquids durch die Rohrleitung an der vorbestimmten Abstandsposition;
- Ermitteln von Störungsstellenparametern, die sich dynamisch für jede Messanordnung ändernde Parameter und feststehende Parameter umfassen und die die Störungsstelle hinsichtlich ihrer Form, Art und Abmessungen beschreiben;
- mittels der Datenverarbeitungseinheit aus den Werten der ermittelten Störungsstellenparameter Interpolieren eines Fehlerfaktors als eine numerische Funktion der Störungsstellenparameter, dabei zur Interpolation des Fehlerfaktors Errechnen der Funktion des Fehlerfaktors in Abhängigkeit der festgelegten Störungsstellenparameter über eine numerische Simulation in Kombination mittels eines neuronalen Netzes;
- aus dem erfassten Durchfluss-Wert $Q_1$ des Liquids mit dem Fehlerfaktor K numerisch Bestimmen eines tatsächlichen Durchflusswertes $Q_2$; dabei Erfassen des von einer Störungsstelle abhängigen Durchflusses an einer Vielzahl an Störungsstellen, die entlang eines vorbestimmten Rohrleitungsabschnitts vorliegen, und Extrapolieren jedes störungsstellenabhängigen Fehlerfaktors zu einem Gesamtfaktor für diesen Rohrleitungsabschnitt; aus dem Gesamtfaktor Bestimmen eines tatsächlichen Gesamt-Durchflusswertes für die Rohrleitung; und
- Ausgeben des Fehlerfaktors K und des berechneten tatsächlichen Durchflusswertes $Q_2$ für jede Störstelle und des Gesamt-Durchflusswertes für die Rohrleitung.

Ein "tatsächlicher Durchfluss" im Sinne der Erfindung ist dabei der Durchfluss eines Liquids durch eine Rohrleitung, die keine Störungsstellen, die Einfluss auf das Strömungsverhalten des Liquids nehmen könnten, aufweist, oder ein Rohrleitungsabschnitt, der in einer entsprechenden Entfernung zu der/den Störungsstelle(n) liegt und eben einem ungestörten Durchfluss entspricht. Ein "erfasster Durchfluss" in der Nähe oder an einer Störungsstelle ist stets ein Durchfluss, der von der Störungsstelle beeinflusst wird und von dem tatsächlichen Durchfluss abweicht. "Durchfluss" im Sinne der Erfindung kann als Volumenstrom, absolut oder in Relation zu einem Durchfluss unter Idealbedingungen sowie ferner als Durchflussrate angegeben sein oder deren Werte verwendet werden. Die Messung ist zeitabhängig, wobei in dem erfindungsgemäßen Verfahren die Zeit in einer Bestimmung des Durchflusswertes nicht verwendet wird. Im Prinzip gibt es zwei Arten von Fehlern, die zu korrigieren sind: Der systematische Fehler und der stochastische Fehler, der durch Turbulenzen im Fluid entsteht. Letzterer wird nicht berücksichtigt, die erfindungsgemäße Korrektur des Durchflusswertes berücksichtigt den weitaus größeren systematischen Fehler.

Das erfindungsgemäße Verfahren ermöglicht es, Fehler und Messungenauigkeiten, die sich durch den Einfluss der Störungsstelle auf die Messanordnung ergeben, auf einfache Art und Weise zu minimieren und die Messgenauigkeit im Vergleich zu bisher genutzten Messverfahren wesentlich zu erhöhen.

Der Einfluss einer Störungsstelle auf den Durchfluss hängt von verschiedenen Faktoren ab, die sich aus der Art, dem Typ und den Abmessungen der Störungsstelle ergeben. So können die Störungsstellen der liquiddurchflossenen Rohrleitung bspw. Rohrleitungs-Einfachbögen, -Doppelbögen, S-förmige Doppelbögen, U-förmige Doppelbögen, Schieber, Drosselklappen, Durchmesser-Erweiterungen, Durchmesser-Verjüngungen und Kombinationen dieser Bauteile sein.

Kombinationen können insbesondere Bögen mit Schiebern, Ventilen oder aus Drosselklappen sein. Die Aufzählung an Störungsstellen ist nicht abschließend; es sind noch weitere Störungsstellen-Typen denkbar. Es ist ferner möglich, dass mehrere Störungsstellen hintereinander angeordnet sind und eine Reihe von Störungsstellen, die einzeln betrachtet werden müssen, oder zusammen eine kombinierte Störungsstelle bilden. Es können noch weitere Störungsstellen in Betracht kommen. Für jede neue Anwendung können andere, noch nicht parametrisierte Störungsstellen in Betracht gezogen und parametrisiert werden und in die Berechnung Eingang finden.

Soll der Einfluss mehrerer Störungsstellen betrachtet werden, kann das Verfahren die weiteren Schritte vorsehen, dass der von einer Störungsstelle abhängige Durchfluss an einer Vielzahl an Störungsstellen, die entlang eines vorbestimmten Rohrleitungsabschnitts vorliegen, erfasst wird und der Fehlerfaktor K jeder Störstelle zu einem Gesamtfaktor für diesen Rohrleitungsabschnitt extrapoliert oder aufsummiert wird. Ferner kann nachfolgend aus dem Gesamtfaktor und der erfassten Durchflusswerte ein tatsächlicher Gesamt-Durchflusswert $Q_3$ bestimmt werden. Das Verfahren kann in dieser Hinsicht flexibel eingesetzt werden und ermöglicht Untersuchungen unterschiedlicher Rohrleitungen.

Dabei kann jede Störungsstelle durch mehrere Störungsstellenparameter beschrieben und parametrisiert werden, die sich entweder dynamisch ändern oder auch statisch sein können. Mit den statischen Parametern sind jegliche geometrische Parameter umfasst, die die Störungsstelle fest beschreiben und nicht veränderlich sind. Unter statische Parameter fallen etwa der Krümmungsradius R eines Rohrleitungsbogens, ein Winkel $\alpha$ zweier Rohrleitungsabschnitte zueinander, eine Bogenausrichtung R/DN des Rohrleitungsbogens, ein Nennwert DN der Rohrleitung, ein Abstand d von Rohrleitungsbögen oder ein Abstand/Länge L2 eines Rohrleitungsabschnitts zwischen zwei Änderungen von Rohrleitungsabschnitten, sowie Verjüngungen und Erweiterungen des Querschnitts der Rohrleitung.

Dynamische Parameter sind etwa eine Öffnungsgröße P eines Schiebers oder eines Ventils, eine Zeit t und ein Abstand L1 bzw. eine Ausrichtung der Messanordnung zu der Störungsstelle bzw. auch eine Orientierung oder Winkelausrichtung eines Pfades mit der Störungsstelle. Es können noch weitere dynamische und statische (bspw. geometrische) Parameter in Frage kommen, die dazu geeignet sind, Rohrleitungs-Abschnitte zu beschreiben, die den Durchfluss eines Liquids durch Rohrleitungen beeinflussen können. So kommt als weiterer dynamischer Parameter auch die Reynoldszahl in Betracht.

Durch diese Parameter kann jede der genannten Störungsstellen beschrieben werden. So wird zum Beispiel eine Störungsstelle mit einem einfachen Rohrleitungsbogen durch den Durchmesser der Rohrleitung, also deren Nennwert, den entsprechenden Krümmungsradius, den Abstand zwischen Störungsstelle und Messanordnung, die Ausrichtung der Messanordnung zu der Störungsstelle sowie einer Fließgeschwindigkeit des Liquids in der Rohrleitung beschrieben. Der Abstand zwischen Störungsstelle und Messanordnung kann für jede Messung neu bestimmt werden und ist abhängig von dem jeweilig verwendeten Messsystem. So ist der zu bestimmende Abstand der bis zum Ende der Störungsstelle. In Fällen, in denen die Messanordnung weit genug von der Störungsstelle weg ist, kann auch die Mitte der Störungsstelle maßgeblich für den Abstand $L_1$ sein. Ferner kann zur Bestimmung der Position der Messanordnung eine Linearintegration erfolgen, wobei der Abstand von der Störstelle zum ersten Sensor und der Abstand von der Störstelle zum zweiten Sensor verwendet werden können.

Weil mehr als drei Parameter vorliegen, ist keine einfache mathematische Lösung mehr möglich. Das erfindungsgemäße Verfahren kann vorsehen, dass zur Interpolation des Fehlerfaktors K die Funktion des Fehlerfaktors K in Abhängigkeit der festgelegten Störungsstellenparameter über eine numerische Simulation in Kombination mittels eines neuronalen Netzes errechnet wird.

Um den Fehlerfaktor K zu interpolieren, kann der folgende Zusammenhang verwendet werden:

$$K_{St\ddot{o}rung}^{Pfad_i} = K_N \cdot \sum_{i=1}^{N} \left( \frac{2}{1 + e^{w_i \cdot Statische\ Parametern\ + w_i' \cdot Dynamische\ Parametern}} - 1 \right) + K_0$$

Dabei entspricht N der Anzahl der Neuronen und $K_N$, $K_0$ sind Kalibrierungsparameter des neuronalen Netzes. Der Exponent der e-Funktion ist dabei in statische und dynamische Parameter aufgeteilt, wobei $w_i$ einer Gewichtung der Parameter entspricht.

Für einen einfachen Bogen kann der Zusammenhang für K wie folgt aussehen:

$$K_{Bogen} = K_N \cdot \sum_{i=1}^{N} \left( \frac{2}{1 + e^{w_{R_i} \cdot R + w_{\alpha_i} \cdot \alpha + w_{L_i} \cdot L + w_{z_i} \cdot z/D + w_{\beta_i} \cdot \beta + w_{0_i}}} - 1 \right) + K_0$$

Dabei ist R der Radius des Rohres, L der Abstand, D die Nennweite des Rohres und $\alpha$ der trigonometrische Winkel des Pfades, $\beta$ der Winkel der Ausrichtung des Pfades, der die Störstelle aufweist.

Der tatsächliche Durchfluss $Q_2$ (hier kurz Q) wird dann mittels des Korrekturfaktors K berechnet wie folgt:

$$Q = \frac{\pi D^2}{4} \cdot \frac{\sum_{i=1}^{n} V_i}{n}$$

mit $V_i$ als der korrigierten gemessenen Geschwindigkeit. Jede korrigierte Geschwindigkeit ist wie unten beschrieben:

$$V_i = K_{St\ddot{o}rung}^{Pfad_i} \cdot K_i \cdot V_i^{Pfad}$$

Dabei ist:

$K_{St\ddot{o}rung}^{Pfad_i}$: Korrekturfaktor nach der Störungsstelle,

$K_i$: Korrekturfaktor der Pfadmessung (Sensor Kopf, Vollentwickeltes Profil), abhängig davon, ob ein spezieller Sensor mit einer eigenen Kalibrierung verwendet wird, oder ob ein großer bzw. kleiner Sensor für ein Rohr mit einem kleinen bzw. großen Durchmesser verwendet wird.

$V_i^{Pfad}$: Pfad Geschwindigkeit [m/s].

Dabei ist $V_1$ die Geschwindigkeit des Liquids, die sich aus dem Zusammenhang Q1=V1*A (mit A dem Querschnitt der Rohrleitung) bestimmt. D (später auch DN) entspricht dem Durchmesser der Rohrleitung; n bestimmt die Anzahl der verwendeten Pfade für die Berechnung.

Zur Minimierung des Einflusses der Störungsstelle in Echtzeit können nur einzelne Werte in die Berechnung gegeben werden. Mit einer zwei-pfadigen Messung in einem diametrischen Modus kann bspw. für einen Einzelbogen eine Messgenauigkeit von unter 1% (Messfehler bei ab 0,3 m/s) erreicht werden, so dass eine starke Verbesserung im Vergleich zum Stand der Technik eintritt.

Die Simulation erfolgt mit einem CFD-Programm (Computational Fluid Dynamics), wobei auch unterschiedliche Simulationsalgorithmen verwendet werden können, um je nach Durchflussmessung ein optimales Ergebnis zu erzielen.

Ferner kann die Erfindung vorsehen, dass die Werte der Störungsstellenparameter aus vorbestimmten Datensätzen, die in einer Datenbank auf der Speichereinheit hinterlegt sind und aktuell durch einen Benutzer ausgewählt werden können. So können die unterschiedlichen Konfigurationen in einer "Look-Up"-Tabelle niedergelegt sein. Alternativ oder zusätzlich kann bzw. durch Auswahl mittels eines Sensors, der ein analoges Signal hinsichtlich eines Status einer Störungsstelle erfasst, ermittelt werden. Die Parameter können so je nach Anwendung in der jeweiligen Art und Weise eingegeben werden.

Für variable Öffnungen, wie Schieber, Ventile oder Drosselklappen kann auch ein geeigneter Sensor an dieser Art der Störungsstellen vorgesehen sein, der die Öffnungsgröße, bzw. die Öffnung des jeweiligen Durchlasses misst und ggf. mittels eines analogen Signals an die Messanordnung den Wert des zugeordneten Störungsstellenparameters zurückgibt. Daraus kann der tatsächliche Durchfluss in Echtzeit berechnet werden.

Die jeweilige vorliegende Störstelle kann für die Berechnung und zur Auswahl der korrekt heranziehenden Störungsstellenparameter über eine auf der Speichereinheit hinterlegten und einer Anzeigeneinheit auszuwählenden Liste ausgewählt werden. Die entsprechenden Parameter können bereits hinterlegt sein oder mittels einer Abfrage gezielt von dem jeweiligen Benutzer abgefragt werden, der Werte für die statischen Parameter eingeben kann.

Zur Durchführung des erfindungsgemäßen Verfahrens zur Verbesserung der Messgenauigkeit einer Durchfluss-Messanordnung in liquiddurchflossenen Rohrleitungen mit einer oder mehreren Störungsstelle(n) ist ein Durchfluss-Messsystem vorgesehen, das eine Durchfluss-Messanordnung mit einem oder mehreren Durchflussmess-Sensoren aufweist, die Ultraschallsensoren sein können. Die Sensoren sind mit der Datenverarbeitungseinheit und einer Speichereinheit operativ gekoppelt. Es kann genügen, wenn die Messanordnung nur die Sensoren umfasst und mit der Datenverarbeitungseinheit und weiteren elektronischen Komponenten über eine drahtgebundene oder eine drahtlose Kommunikation verbunden ist. In einer alternativen Ausführungsform der Erfindung können auch alle Messkomponenten zusammen in einem Gehäuse kompakt zusammengefasst sein.

Gemäß einer Weiterbildung der Erfindung kann vorgesehen sein, dass die Messanordnung vor oder nach einer Störungsstelle in dem vorbestimmten Abstand L angeordnet werden kann, wobei der vorbestimmte Abstand L ein Vielfaches der Nennweite der liquiddurchflossenen Rohrleitung ist. Bei einem Abstand, der über das Fünfzigfache der Nennweite der Rohrleitung hinausgeht, sind die Einflüsse der jeweiligen Störungsstelle nicht mehr zu spüren. Dies ist für das erfindungsgemäße Verfahren zu beachten.

Der Ultraschallsensor oder mehrere Ultraschallsensoren können an einem der Endpunkte einer Sekante eines Querschnitts, diametrisch, chordal oder radial an einer Mantelfläche der liquiddurchflossenen Rohrleitung angeordnet ist bzw. sein. Werden die Sensoren chordal zueinander angeordnet, befinden sich die Sensoren beide auf der gleichen Ebene. Damit können verschiedene Messkonstellationen und Messanordnungen ermöglicht werden. Neben Laufzeit- oder Doppleranordnungen kann auch das Prinzip der Kreuzkorrelation verwendet werden, wobei es möglich ist, dass nur ein einzelner Ultraschallsensor die Rohrleitung radial durchstrahlt. In einer Doppleranordnung stünden sich jeweils zwei Ultraschallsensoren paarweise als Sende- und Empfangseinheit gegenüber. Das erfindungsgemäße Verfahren kann mit jeder Art der Messanordnung durchgeführt werden.

Die oben beschriebenen Berechnungen können mittels eines Softwareprogramms oder Softwareprogrammprodukts, das auf einem Datenträger gespeichert sein kann, durchgeführt werden. Dazu ist die Messanordnung mit der Datenverarbeitungseinheit in geeigneter Weise elektronisch und operativ verbunden. Das Softwareprogramm oder Softwareprogrammprodukt verarbeitet dabei von der Messanordnung zum Messen des Durchflusses $Q_1$ zum Zeitpunkt t erfasste Werte, die ermittelten Werte für die Störungsstellenparameter, den aus den Störungsstellenparametern interpolierten Fehlerfaktor K, und den aus dem Fehlerfaktor K und dem störungsstellenabhängigen Durchfluss $Q_1$ bestimmten tatsächlichen Durchflusswert $Q_2$. Die für die Berechnung benötigten Werte können manuell eingegeben werden oder können für vorbestimmte Berechnungen bereits in der Speichereinheit vorliegen und in einer Datenbank gesichert sein. Über ein geeignetes Auswahlfeld an einer Bedieneinheit der Datenverarbeitungseinheit können diese ausgelesen werden.

Ausführungsformen der Messvorrichtung zur Durchführung des erfindungsgemäßen Verfahrens werden durch die nachfolgende ausführliche Beschreibung unter Bezug auf die begleitenden Figuren gezeigt, so dass die Verfahrensführung deutlich und besser verständlich wird.

Dabei zeigen:

**Fig. 1**      eine schematische Ansicht der Rohrleitung mit einer Messanordnung und einer Störstelle,

**Fig. 2 bis 5**      Querschnitte durch die Rohrleitung mit unterschiedlicher Anordnung der Ultraschallsensoren, und

**Fig. 6 bis 11**      verschiedene Typen von Störungsstellen.

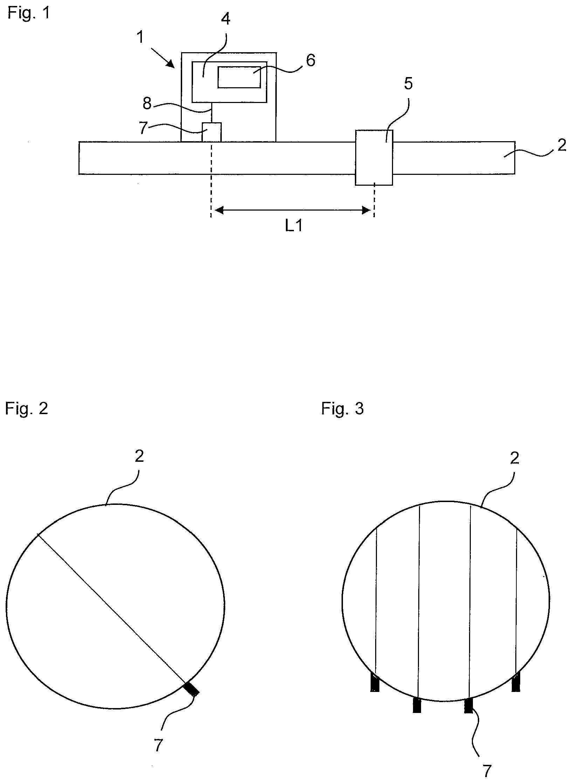

Die **Fig. 1** zeigt eine Messanordnung 1, die an einer liquiddurchflossenen Rohrleitung 2 angeordnet ist. Im Wesentlichen ist jede Messanordnung 1 aus einer oder mehreren Ultraschallsensoren 7 sowie einer Datenverarbeitungseinheit 4 aufgebaut. Die Ultraschallsensoren 7 sind mit der Datenverarbeitungseinheit 4 operativ über eine geeignete elektronische Schaltung miteinander verbunden. Die Kommunikation ist in **Fig. 1** drahtgebunden über elektrische Leitungen 5, kann aber auch drahtlos erfolgen, bspw. via Nahfeldfunk, Bluetooth® oder W-LAN.

In **Fig. 2 bis 5** sind Anordnungen von einem oder mehreren Ultraschallsensoren 7 dargestellt: So zeigt **Fig. 2,** dass nur ein einziger Ultraschallsensor 7 an der Rohrleitung 2 angeordnet ist, der eine radiale Messung durchführen kann; mit dieser Anordnung kann die sogenannte Kreuzkorrelation durchgeführt werden.

In **Fig. 3** sind vier Ultraschallsensoren 7 gezeigt, die in einer sogenannten chordalen Messanordnung vorliegen und womit sich ebenfalls eine Messung in Kreuzkorrelation durchführen lässt. Dabei werden die Ultraschallsensoren 7 so angeordnet, dass sie jeweils einen Kreisabschnitt durchstrahlen, also an Sekanten Anfangs- bzw. Endpunkten liegen.

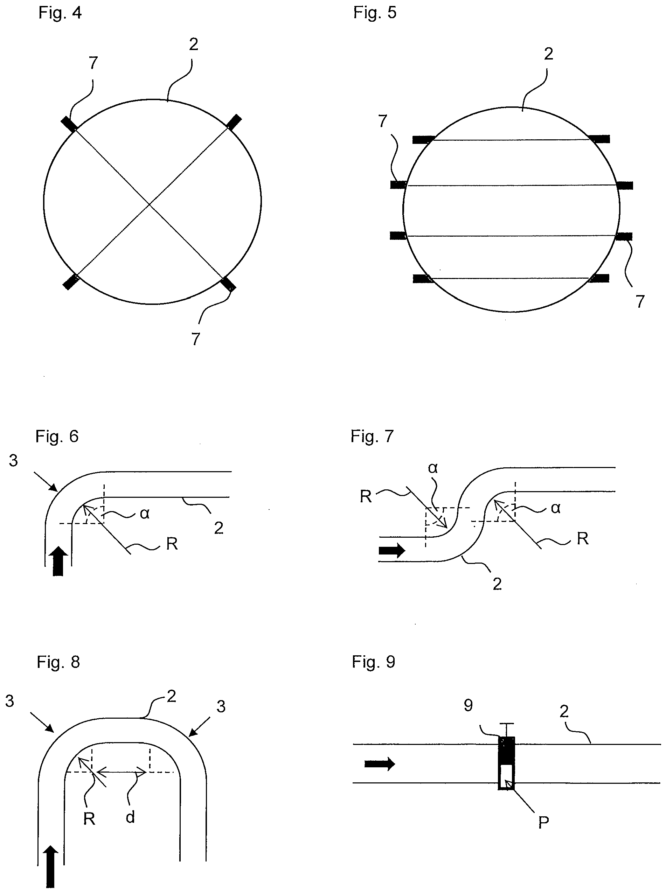

Die **Fig. 4** zeigt vier Ultraschallsensoren 7, die paarweise zueinander gekreuzt angeordnet sind und radiale Messungen durchführen lassen. **Fig. 5** zeigt insgesamt acht Ultraschallsensoren 7, die paarweise in chordaler Messanordnung an der Rohrleitung 2 vorliegen. Mit den in **Fig. 4** und **5** gezeigten Messanordnungen 1 lassen sich insbesondere Laufzeit- und Doppler-Messungen durchführen.

Die Messanordnung 1 ist benachbart zu einer Störungsstelle 5 in einem vorbestimmten Abstand L1 dazu angeordnet. Der Abstand bemisst sich nach der Nennweite der Rohrleitung 2: L1 = X * DN, wobei für den Abstand L1 der Messanordnung 1 zu der Störungsstelle 5, DN die Nennweite der Rohrleitung 2 und X ein Faktor ist, der in einem Bereich von 0 bis 50 liegt. Bei einem Wert von X höher als 50 ist der Einfluss der Störungsstelle auf den Durchfluss nicht mehr relevant.

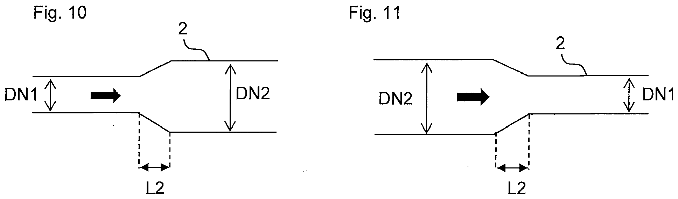

Es gibt verschiedene Typen von Störungsstellen 5 und werden von unterschiedlichen Parameterwerten beschrieben, die in der nachfolgenden Tabelle zusammengefasst sind (siehe **Fig. 6** bis **11**). Dabei bezeichnet $\alpha$ den Winkel zwischen zwei geraden Rohrleitungsstücken, R den Radius eines Rohrleitungs-Bogens 3 und DN den Nennwert der Rohrleitung 2, d. h. ihren Durchmesser. Ferner bezeichnet L1 den Abstand zwischen Störungsstelle 5 und Ultraschallsensor 7. DN1 und DN2 stehen für unterschiedliche Nennwerte entlang der Rohrleitung 2, wobei DN1 den Durchmesser eines Rohrleitungsabschnitts parametrisiert, der einen kleineren Nennwert als der Nennwert DN2 hat. Zwischen dem Rohrleitungsabschnitt mit Nennwert DN1 und dem Rohrleitungsabschnitt mit Nennwert DN2 liegt ein Übergangsabschnitt vor (Verjüngung oder Erweiterung des Rohrleitungsdurchmessers), dessen Länge durch den Parameter L2 bezeichnet ist (siehe insbesondere **Fig. 10** und **11**).

Bspw. wird ein U-förmiger Doppelbogen (**Fig. 8**) durch den Winkel $\alpha$ des Rohrleitungsbogens 3, dem Verhältnis R/DN sowie einem Abstand d der Rohrleitungsbögen 3 voneinander beschrieben.

Weitere Störstellen 5 können ein Schieber 9 oder ein Drosselventil sein, deren Öffnungsgrad mit dem Parameter P bezeichnet sind. P gibt in Prozent an, wie weit der Durchlass des Schiebers 9 bspw. geöffnet ist.

Tabelle 1:

| Störungsstelle 5 | Bereich | Abstand |
|---|---|---|
| Einfachbogen (siehe **Fig. 6**) | $30° \leq \alpha \leq 90°$<br>$1 \leq R/DN \leq 5$ | $0\,DN \leq L1 \leq 50\,DN$ |
| Doppelbogen S (siehe **Fig. 7**) | $\alpha = 90°$<br>$R/DN = 1$ | $0\,DN \leq L1 \leq 50\,DN$ |
| Doppelbogen U (siehe **Fig. 8**) | $\alpha = 90°$<br>$R/DN = 1$<br>d=0 oder DN | $0\,DN \leq L1 \leq 50\,DN$ |
| Doppelbogen in zwei Ebenen (siehe **Fig. 7**) | $\alpha = 90°$<br>$R/DN = 1$ | $0\,DN \leq L1 \leq 50\,DN$ |
| Schieber (siehe **Fig. 9**) | $0 \leq P \leq 100\%$ | $0\,DN \leq L1 \leq 50\,DN$ |
| Drosselklappe (siehe **Fig. 9**) | $0 \leq P \leq 100\%$ | $0\,DN \leq L1 \leq 50\,DN$ |
| Erweiterung des Durchmessers (siehe **Fig. 10**) | $0.1 \leq DN1/DN2 \leq 1$<br>$0 \leq L2 \leq DN2$ | $0\,DN \leq L1 \leq 50\,DN$ |
| Verjüngung des Durchmessers (siehe **Fig. 11**) | $1 \leq DN1/DN2 \leq 10$<br>$0 \leq L2 \leq DN1$ | $0\,DN \leq L1 \leq 50\,DN$ |
| Schieber und Einfachbogen | $30° \leq \alpha \leq 90°$<br>$1 \leq R/DN \leq 5$<br>$0 \leq P \leq 100\%$ | $0\,DN \leq L1 \leq 50\,DN$ |
| Schieber und S-förmiger Doppelbogen | $\alpha = 90°$<br>$R/DN = 1$<br>$0 \leq P \leq 100\%$ | $0\,DN \leq L1 \leq 50\,DN$ |
| Schieber und U-förmiger Doppelbogen | $\alpha = 90°$<br>$R/DN = 1$<br>d = 0 oder DN<br>$0 \leq P \leq 100\%$ | $0\,DN \leq L1 \leq 50\,DN$ |

(fortgesetzt)

| Störungsstelle 5 | Bereich | Abstand |
|---|---|---|
| Schieber und Doppelbogen in zwei Ebenen | $\alpha = 90°$<br>$R/DN = 1$<br>$0 \le P \le 100\%$ | $0\,DN \le L1 \le 50\,DN$ |

BEZUGSZEICHENLISTE

1    Messanordnung
2    Rohrleitung
3    Rohrleitungsbogen
4    Datenverarbeitungseinheit
5    Störungsstelle
6    Speichereinheit
7    Ultraschallsensor
8    elektrische Leitung
9    Schieber

L    Abstand Messanordnung zu Störstelle

**Patentansprüche**

1. Verfahren zur Verbesserung der Messgenauigkeit einer Durchfluss-Messanordnung (1) in liquiddurchflossenen Rohrleitungen (2) mit zumindest einer Störungsstelle (5), die einen Durchfluss eines Liquids durch die Rohrleitungen (2) derart beeinflusst, dass eine Durchflussmessung der Messanordnung (1) beeinträchtigt wird, wobei die Durchfluss-Messanordnung (1) mit einer Datenverarbeitungseinheit (4) und einer Speichereinheit (6) operativ gekoppelt ist, **umfassend die Schritte**

   - Auswählen einer Störungsstelle (5) in der Rohrleitung (2) und Anordnen der Durchfluss-Messanordnung (1) in einem vorbestimmten Abstand (L1) benachbart zu der Störungsstelle (5) an der liquiddurchflossenen Rohrleitung (2);
   - mit der Durchfluss-Messanordnung (1) Messen zum Zeitpunkt t eines von der Störungsstelle (5) abhängigen Durchfluss-Wertes $Q_1$ des Liquids durch die Rohrleitung (2) an der vorbestimmten Abstandsposition (L1);
   - Ermitteln von Störungsstellenparametern, die dynamisch sich für jede Messanordnung (1) ändernde Parameter und feststehende Parameter umfassen und die die Störungsstelle (5) hinsichtlich ihrer Form, Art und Abmessungen beschreiben;
   - mittels der Datenverarbeitungseinheit (4) aus den Werten der ermittelten Störungsstellenparameter Interpolieren eines Fehlerfaktors (K) als eine numerische Funktion der Störungsstellenparameter, dabei zur Interpolation des Fehlerfaktors (K) Errechnen der Funktion des Fehlerfaktors (K) in Abhängigkeit der festgelegten Störungsstellenparameter über eine numerische Simulation in Kombination mittels eines neuronalen Netzes;
   - aus dem erfassten Durchfluss-Wert $Q_1$ des Liquids mit dem Fehlerfaktor (K) numerisch Bestimmen eines tatsächlichen Durchflusswertes ($Q_2$);
   - dabei Erfassen des von einer Störungsstelle (5) abhängigen Durchflusses an einer Vielzahl an Störungsstellen (5), die entlang eines vorbestimmten Rohrleitungsabschnitts vorliegen, und Extrapolieren jedes störungsstellenabhängigen Fehlerfaktors (K) zu einem Gesamtfaktor für diesen Rohrleitungsabschnitt;
   - aus dem Gesamtfaktor Bestimmen eines tatsächlichen Gesamt-Durchflusswertes ($Q_3$) für die Rohrleitung (2); und
   - Ausgeben des Fehlerfaktors (K) und des berechneten tatsächlichen Durchflusswertes ($Q_2$) für jede Störstelle und des Gesamt-Durchflusswertes ($Q_3$) für die Rohrleitung (2).

2. Verfahren nach Anspruch 1,
   wobei
   die Störungsstellen (5) der liquiddurchflossenen Rohrleitung (2) aus der Gruppe ausgewählt sind, die Rohrleitungs-Einfachbögen, -Doppelbögen, S-förmige Doppelbögen, U-förmige Doppelbögen, Schieber (10), Drosselklappen, Durchmesser-Erweiterungen, Durchmesser-Verjüngungen und Kombinationen daraus umfasst.

**3.** Verfahren nach Anspruch 1 oder 2,
   wobei die

   - feststehenden Parameter aus der Gruppe ausgewählt sind, die einen Krümmungsradius (R) eines Rohrleitungsbogens, einen Winkel ($\alpha$) zweier Rohrleitungsabschnitte zueinander, eine Bogenausrichtung (R/D) des Rohrleitungsbogens, zumindest einen Nennwert (DN, DN1, DN2) der Rohrleitung (2), umfasst, und
   - die sich ändernden Parameter aus der Gruppe ausgewählt sind, die eine Öffnungsgröße (P) eines Schiebers (10) oder eines Ventils, eine Zeit (t) und einen Abstand (L) und/oder Ausrichtung der Messanordnung (1) zu der Störungsstelle (5), umfasst.

**4.** Verfahren nach zumindest einem der Ansprüche 1 bis 3,
   wobei
   die Werte der Störungsstellenparameter aus vorbestimmten Datensätzen, die in einer Datenbank auf der Speichereinheit (6) hinterlegt sind, und/oder aktuell durch einen Benutzer und/oder durch Auswahl mittels eines Sensors, der ein analoges Signal hinsichtlich eines Status einer Störungsstelle (5) erfasst, ermittelt werden.

**5.** Verfahren nach zumindest einem der Ansprüche 1 bis 4,
   **umfassend den Schritt**

   - Anordnen der Messanordnung (1) vor oder nach einer Störungsstelle (5) an der vorbestimmten Abstandsposition (L1), wobei der vorbestimmte Abstand (L1) ein Vielfaches der Nennweite (DN) der liquiddurchflossenen Rohrleitung (2) ist.

**6.** Verfahren nach zumindest einem der Ansprüche 1 bis 5,
   wobei
   zum Messen des von der Störungsstelle (5) abhängigen Durchflusswertes ($Q_1$) die Durchfluss-Messanordnung (1) zumindest einen Durchflussmess-Sensor, bevorzugt einen Ultraschallsensor (7) aufweist.

**7.** Verfahren nach Anspruch 6,
   wobei
   der zumindest eine Ultraschallsensor (7) an einem der Endpunkte einer Sekante eines Querschnitts oder radial an einer Mantelfläche der liquiddurchflossenen Rohrleitung (2) angeordnet ist.

**8.** Softwareprogramm oder Softwareprogrammprodukt, das auf einem Datenträger gespeichert ist, zum Ausführen des Verfahrens nach zumindest einem der Ansprüche 1 bis 7, wenn es von der Datenverarbeitungseinheit (4) betrieben wird, **dadurch gekennzeichnet, dass**
   das Softwareprogramm oder Softwareprogrammprodukt

   - von der Messanordnung (1) zum Messen des Durchflusses ($Q_1$) zum Zeitpunkt t erfasste Werte,
   - die ermittelten Werte für die Störungsstellenparameter,
   - den aus den Störungsstellenparametern interpolierten Fehlerfaktor (K), der in Abhängigkeit der festgelegten Störungsstellenparameter über eine numerische Simulation in Kombination mittels eines neuronalen Netzes errechnet wird,
   - den aus dem Fehlerfaktor (K) und dem störungstellenabhängigen Durchfluss ($Q_1$) bestimmten tatsächlichen Durchflusswert ($Q_2$)
   verarbeitet.

**Claims**

**1.** A method for improving the measuring precision of a flow measuring assembly (1) in pipelines (2) through which a liquid flows, comprising at least one disturbance point (5), which influences the flow of a liquid through the pipelines (2) such that a flow measurement of the measuring assembly (1) is impaired, wherein the flow measuring assembly (1) is operatively coupled to a data processing unit (4) and a storage unit (6), **comprising the steps of**

- selecting a disturbance point (5) in the pipeline (2) and arranging the flow measuring assembly (1) on the pipeline (2) through which a liquid flows at a predetermined distance (L1) adjacent to the disturbance point (5);
- using the flow measuring assembly (1) to measure a flow value $Q_1$, which is a function of the disturbance point (5), of the liquid flowing through the pipeline (2) at the predetermined distance position (L1) at the point in time t;
- determining disturbance point parameters, which comprise parameters that change dynamically for each measuring assembly (1), and parameters that are fixed, and which describe the disturbance point (5) with respect to its shape, type, and dimensions;
- using the data processing unit (4) to interpolate an error factor (K) as a numerical function of the disturbance point parameters from the values of the determined disturbance point parameters, thereby calculating the function of the error factor (K) as a function of the fixed disturbance point parameters via a numerical simulation in combination with a neuronal network in order to interpolate the error factor (K);
- numerically determining an actual flow value ($Q_2$) from the detected flow value $Q_1$ of the liquid using the error factor (K);
- thereby detecting the flow, which is a function of a disturbance point (5), at a plurality of disturbance points (5), which are present along a predetermined pipeline section, and extrapolating each error factor (K), which is a function of the disturbance point (5), to form a total factor for this pipeline section;
- determining an actual total flow value ($Q_3$) for the pipeline (2) from the total factor; and
- outputting the error factor (K) and the calculated actual flow value ($Q_2$) for each disturbance point and the total flow value ($Q_3$) for the pipeline (2).

2. The method according to claim 1,
wherein
the disturbance points (5) of the pipeline (2) through which liquid flows, are selected from the group, which comprises pipeline single bends, double bends, S-shaped double bends, U-shaped double bends, gates (10), throttle valves, diameter expansions, diameter tapers, and combinations thereof.

3. The method according to claim 1 or 2,

- wherein the fixed parameters are selected from the group, which comprises a radius of curvature (R) of a pipeline bend, an angle ($\alpha$) of two pipeline portions relative to one another, a bend orientation (R/D) of the pipeline bend, at least one nominal value (DN, DN1, DN2) of the pipeline (2), and
- the changing parameters are selected from the group, which comprises an opening size (P) of a gate (10) or of a valve, a time (t), and a distance (L) and/or orientation of the measuring assembly (1) to the disturbance point (5).

4. The method according to at least any one of claims 1 to 3,
wherein
the values of the disturbance point parameters are determined from predetermined data sets, which are stored in a database on the storage unit (6), and/or currently by means of a user and/or by selection by means of a sensor, which detects an analogue signal with respect to a status of a disturbance point (5).

5. The method according to at least any one of claims 1 to 4,
**comprising the step of**

- arranging the measuring assembly (1) upstream of or downstream from an interference point (5) at the predetermined distance position (L1), wherein the predetermined distance (L1) is a multiple of the nominal width (DN) of the pipeline (2) through which liquid flows.

6. The method according to at least any one of claims 1 to 5,
wherein
for measuring the flow value ($Q_1$), which is a function of the disturbance point (5), the flow measuring assembly (1) has at least one flow sensor, preferably an ultrasonic sensor (7).

7. The method according to claim 6,
wherein
the at least one ultrasonic sensor (7) is arranged at one of the end points of a secant of a cross section or radially at a jacket surface of the pipeline (2) through which liquid flows.

**8.** A software program or software program product, which is stored on a data carrier, for executing the method according to at least any one of claims 1 to 7, when it is operated by the data processing unit (4),
**characterised in that**
the software program or software program product processes

- values detected by the measuring assembly (1) for measuring the flow ($Q_1$) at the time t,
- the determined values for the disturbance point parameters,
- the error factor (K) interpolated from the disturbance point parameters, which is calculated as a function of the specified disturbance point parameters via a numerical simulation in combination with a neuronal network,
- the actual flow value ($Q_2$) determined from the error factor (K) and the flow ($Q_1$), which is a function of the disturbance point.

**Revendications**

**1.** Procédé permettant l'amélioration de la précision de mesure d'un dispositif de mesure de débit (1) dans des conduites traversées par un liquide (2) avec au moins un point de perturbation (5) qui influe sur un débit d'un liquide dans les conduites (2) et porte ainsi préjudice à une mesure de débit réalisée au moyen du dispositif de mesure (1), le dispositif de mesure de débit (1) étant couplé de manière opérationnelle à une unité de traitement des données (4) et à une unité de stockage (6),
**comprenant les étapes**

- Sélection d'un point de perturbation (5) dans la conduite (2) et disposition du dispositif de mesure de débit (1) à un écart (L1) prédéterminé, adjacent au point de perturbation (5) sur la conduite traversée par le liquide (2);
- Au moyen du dispositif de mesure de débit (1), mesure à l'instant t d'une valeur de débit $Q_1$ du liquide, dépendant du point de perturbation (5), dans la conduite (2) à la position d'écart (L1) prédéterminée;
- Détermination de paramètres des points de perturbation, lesquels englobent dynamiquement, pour chaque dispositif de mesure (1), des paramètres variables et des paramètres fixes et décrivent le point de perturbation (5) quant à sa forme, sa nature et ses dimensions;
- Au moyen de l'unité de traitement des données (4), à partir des valeurs des paramètres des points de perturbation établis, interpolation d'un facteur d'erreur (K) comme une fonction numérique des paramètres des points de perturbation, conjointement pour l'interpolation du facteur d'erreur (K), calcul de la fonction du facteur d'erreur (K) en relation avec les paramètres des points de perturbation définis, par le biais d'une simulation numérique combinée au moyen d'un réseau neuronal;
- À partir de la valeur de débit enregistrée $Q_1$ du liquide avec le facteur d'erreur (K), détermination numérique d'une valeur de débit réelle ($Q_2$);
- Conjointement enregistrement du débit dépendant d'un point de perturbation (5) sur un grand nombre de points de perturbation (5) qui se trouvent le long d'une section de conduite prédéterminée et extrapolation de chaque facteur d'erreur (K) dépendant du point de perturbation en un facteur global pour cette section de conduite;
- À partir du facteur global, détermination d'une valeur de débit total réel ($Q_3$) pour la conduite (2) et
- Émission du facteur d'erreur (K) et de la valeur de débit réel calculé ($Q_2$) pour chaque point de perturbation et de la valeur de débit total ($Q_3$) pour la conduite (2).

**2.** Procédé conformément à la revendication n°1,
les points de perturbation (5) de la conduite traversée par le liquide (2) étant sélectionnés dans le groupe qui comprend des coudes simples de conduites, des coudes doubles de conduites, des coudes doubles en forme de S, des coudes doubles en forme de U, des vannes (10), des clapets d'étranglement, des extensions de diamètres, des diminutions de diamètres et des combinaisons de ces derniers.

**3.** Procédé conformément à la revendication n°1 ou n°2,
les paramètres fixes étant sélectionnés dans le groupe qui comprend un rayon de courbure (R) d'un coude de conduite, un angle ($\alpha$) de deux sections de conduite l'une par rapport à l'autre, un alignement (R/D) du coude de conduite, au moins une valeur nominale (DN, DN1, DN2) de la conduite (2) et

- les paramètres variables étant sélectionnés dans le groupe qui comprend une grandeur d'ouverture (P) d'une vanne (10) ou d'une soupape, un temps (t) et un écart (L) et/ou un alignement du dispositif de mesure (1) par rapport au point de perturbation (5).

**4.** Procédé conformément au moins à l'une des revendications n°1 à n°3, les valeurs des paramètres des points de perturbation étant établies à partir de jeux de données prédéterminés qui sont stockés dans une base de données sur l'unité de stockage (6) et/ou actuellement enregistrés par un utilisateur et/ou par une sélection au moyen d'un capteur qui détecte un signal analogique en ce qui concerne un état d'un point de perturbation (5).

**5.** Procédé conformément au moins à l'une des revendications n°1 à n°4, **comprenant l'étape**

- Disposition du dispositif de mesure (1) avant ou après un point de perturbation (5) à la position d'écart (L1) prédéterminée, l'écart (L1) prédéterminé étant un multiple du diamètre nominal (DN) de la conduite traversée par le liquide (2).

**6.** Procédé conformément au moins à l'une des revendications n°1 à n°5, le dispositif de mesure de débit (1) présentant au moins un capteur de mesure de débit, préférablement un capteur à ultrasons (7), pour la mesure de la valeur de débit ($Q_1$) dépendant du point de perturbation (5).

**7.** Procédé conformément à la revendication n°6, au moins un capteur à ultrasons (7) étant disposé à l'une des extrémités d'une sécante d'une coupe transversale ou radialement sur une surface d'enveloppe de la conduite traversée par le liquide (2).

**8.** Logiciel ou produit logiciel qui est enregistré sur un support de données, pour l'exécution du procédé conformément au moins à l'une des revendications n°1 à n°7, quand celui-ci est exploité par l'unité de traitement des données (4), **caractérisé en ce que** le logiciel ou produit logiciel traite

- les valeurs enregistrées par le dispositif de mesure (1) pour la mesure du débit ($Q_1$) à l'instant t,
- les valeurs établies pour les paramètres des points de perturbation,
- le facteur d'erreur (K) interpolé à partir des paramètres des points de perturbation, lequel est calculé en relation avec les paramètres des points de perturbation définis, par le biais d'une simulation numérique combinée au moyen d'un réseau neuronal,
- la valeur de débit réel ($Q_2$) déterminée à partir du facteur d'erreur (K) et du débit ($Q_1$) dépendant du point de perturbation.

Fig. 1

L1

Fig. 2

2

7

Fig. 3

2

7

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013164805 A1

**In der Beschreibung aufgeführte Nicht-Patentliteratur**

- **YEH T. T. et al.** An intelligent ultrasonic flow meter for improved flow measurement and flow calibration facility. *IMTC 2001 Proceedings of the 18th IEEE Instrumentation and Measurement Technology Conference, Budapest,* 21. Mai 2001